# EUROPEAN PATENT APPLICATION

(11) **EP 4 564 280 A1**
(43) Date of publication of application: **04.06.2025**
(21) Application number: 24216650.2
(22) Date of filing: 29.11.2024
(51) Int. Cl.: G06Q 50/18, G06Q 10/10

(54) **KNOWLEDGE-BASED, AI-DRIVEN, MULTI-JURISDICTIONAL, EDGE-BASED VALIDITY DETERMINATION SYSTEM AND METHOD**

(30) Priority: 01.12.2023 CA 3221695
(71) Applicant: ADAMS, Phillip M., Afton WY 83110 (US)
(72) Inventor: ADAMS, Phillip M., Afton WY 83110 (US)
(74) Representative: Håmsø Patentbyrå AS

(57) **Abstract**

A method for ascertaining the validity or enforceability of an intellectual property right is disclosed. In one embodiment, such a method identifies a jurisdiction associated with an acquired intellectual property right and identifies one or more logic conditions of the jurisdiction deemed to affect validity or enforceability of the acquired intellectual property right. The logic conditions may be encoded in a spoken language associated with the jurisdiction. The method converts the logic conditions from the spoken language into one or more predicates conforming to first order predicate calculus. The method trains, on a computing device, the one or more predicates with a particular set of facts to validate and verify a proper logical outcome. The one or more predicates are then deployed to an edge device to execute on a logical inference processor implemented on the edge device. A corresponding system and computer program product are also disclosed.

## Description

### BACKGROUND

### FIELD OF THE INVENTION

This invention relates to systems and methods for efficiently ascertaining the validity or enforceability of intellectual property rights.

### BACKGROUND OF THE INVENTION

With any intellectual property right, whether it be a patent, trademark, copyright, or the like, the jurisdiction having authority to grant and enforce the intellectual property right may set forth requirements for granting or maintaining the intellectual property right. These requirements may be set forth in statutes, regulations, or operating rules of the particular jurisdiction that is authorized to grant, enforce, and maintain the intellectual property right. In certain cases, these statutes, regulations, or operating rules may be established in accordance with treaties or agreements between multiple jurisdictions to provide consistency and enforceability across the jurisdictions.

In some cases, violation of or non-compliance with these requirements may be grounds for the jurisdiction to deny the grant of the intellectual property right. In other cases, later discovery of a violation or non-compliance with the requirements may be grounds for the jurisdiction to invalidate or deem unenforceable an intellectual property right that has already been granted.

In litigation or disputes involving intellectual property, many intellectual property rights (e.g., patent, trademarks, etc.) may be involved. Determining liability between parties in such litigation or disputes may ultimately depend on the validity or enforceability of the underlying intellectual property rights. Thus, challenging the validity or enforceability of such intellectual property rights can be one way to avoid liability, or provide a party in the dispute freedom to operate in a space previously clouded or protected by the intellectual property right. Nevertheless, performing due diligence necessary to determine the validity or enforceability of such intellectual property rights can be a time-consuming and laborious process, not only because many facts may be associated with each intellectual property right, but also because many statutes, regulations, and/or operating rules may govern its validity or enforceability.

In view of the foregoing, what are needed are systems and methods to determine the validity or enforceability of intellectual property rights, or provide information that may be useful to challenge the validity or enforceability of intellectual property rights. Further needed are systems and methods to determine the validity or enforceability of intellectual property rights by gathering facts associated with the intellectual property rights and applying these facts to statutes, regulations, or operating rules that affect their validity or enforceability. Ideally, such systems and methods will perform these tasks in a semi or fully automated and efficient manner to facilitate the evaluation of many intellectual property rights in a short amount of time.

### SUMMARY

The text and other materials of this patent application are subject to copyright protection by the Applicant. Applicant grants a royalty free license to copy the patent documents in their entirety and as maintained by the U.S. Patent and Trademark Office and/or European Patent Office for use in research or as prior art. Applicant authorizes no other use of the text and other materials such as block diagrams, architectural renderings, drawings, or other works embodied herein.

The invention has been developed in response to the present state of the art and, in particular, in response to the problems and needs in the art that have not yet been fully solved by currently available systems and methods. Accordingly, systems and methods have been developed for ascertaining the validity or enforceability of intellectual property rights. The features and advantages of the invention will become more fully apparent from the following description and appended claims, or may be learned by practice of the invention as set forth hereinafter.

Consistent with the foregoing, a method for ascertaining the validity or enforceability of an intellectual property right is disclosed. In one embodiment, such a method identifies a jurisdiction associated with an acquired intellectual property right and identifies one or more logic conditions of the jurisdiction deemed to affect validity or enforceability of the acquired intellectual property right. These logic conditions may be extracted from statutes of the jurisdiction, regulations of the jurisdiction, and/or operational rules of the jurisdiction used to implement statutes or regulations of the jurisdiction The one or more logic conditions may be encoded in a spoken language associated with the jurisdiction. The method converts the one or more logic conditions from the spoken language into one or more predicates conforming to first order predicate calculus. The method then trains, on a computing device, the one or more predicates with a particular set of facts to validate and verify a proper logical outcome. The one or more predicates are then deployed to an edge device to execute on a logical inference processor implemented on the edge device. The edge device provides evidence to challenge at least one of invalidity and unenforceability of the acquired intellectual property right.

A corresponding system and computer program product are also disclosed and claimed herein.

### BRIEF DESCRIPTION OF THE DRAWINGS

In order that the advantages of the invention will be readily understood, a more particular description of the invention briefly described above will be rendered by reference to specific embodiments illustrated in the appended drawings. Understanding that these drawings depict only typical embodiments of the invention and are not therefore to be considered limiting of its scope, the embodiments of the invention will be described and explained with additional specificity and detail through use of the accompanying drawings, in which:
Figure 1 is a high-level block diagram showing one example of a computing system for use in implementing a knowledge-based, AI-driven, multi-jurisdictional, edge-based validity determination system in accordance with the invention;
Figure 2 is a high-level block diagram showing various modules that may be included in a knowledge-based, AI-driven, multi-jurisdictional, edge-based validity determination system;
Figure 3 is a process flow diagram showing one embodiment of a process for training a knowledge base in accordance with the invention;
Figure 4 is a high-level block diagram showing one example of statutes, regulations, and operational rules associated with a particular rule (e.g., entity status) in a selected jurisdiction, in this example the United States;
Figure 5 is a high-level block diagram showing one example of an AND-OR graph representing the legal rules of Figure 4;
Figure 6 is a high-level block diagram showing one example of transforming the AND-OR graph of Figure 5 into ("IF-THEN" rules) predicates in accordance with first order predicate calculus;
Figure 7 is a high-level block diagram showing another example of statutes, regulations, and operational rules associated with a particular rule (e.g., oaths or declarations of inventors) in a selected jurisdiction, in this example the United States;
Figure 8 is a high-level block diagram showing one example of an AND-OR graph representing the legal rules of Figure 7;
Figure 9 is a high-level block diagram showing an example of transforming the AND-OR graph of Figure 8 into ("IF-THEN" rules) predicates in accordance with first order predicate calculus;
Figure 10 is a high-level block diagram showing transformation of rules into bytecodes executable on a logical inference processor of an edge device;
Figure 11 is a high-level block diagram of a knowledge-based, AI-driven system in accordance with the invention implemented on an edge device;
Figure 12 is a high-level flow diagram showing transformation of rules in a spoken language to predicate logic to actual bytecodes for execution on a logical inference processor;
Figure 13 is a high-level block diagram showing bytecode dataflow within a logical inference processor;
Figure 14 is a high-level block diagram showing one example of the internal architecture of a logical inference processor for use with a system in accordance with the invention; and
Figure 15 is a high-level block diagram showing one example of a logical inference processor implemented on an ASIC or FPGA.

### DETAILED DESCRIPTION

It will be readily understood that the components of the present invention, as generally described and illustrated in the Figures herein, could be arranged and designed in a wide variety of different configurations. Thus, the following more detailed description of the embodiments of the invention, as represented in the Figures, is not intended to limit the scope of the invention, as claimed, but is merely representative of certain examples of presently contemplated embodiments in accordance with the invention. The presently described embodiments will be best understood by reference to the drawings, wherein like parts are designated by like numerals throughout.

The present invention may be embodied as a system, method, and/or computer program product. The computer program product may include a computer readable storage medium (or media) having computer readable program instructions thereon for causing a processor to carry out aspects of the present invention.

The computer readable storage medium may be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, logic (declarative) programming languages such as Prolog, Ciao or the like, and conventional procedural programming languages, such as the "C" programming language or similar programming languages.

The computer readable program instructions may execute entirely on a user's computer, partly on a user's computer, as a stand-alone software package, partly on a user's computer and partly on a remote computer, or entirely on a remote computer or server. In the latter scenario, a remote computer may be connected to a user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, may be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus, or other device to produce a computer implemented process, such that the instructions which execute on the computer, other programmable apparatus, or other device implement the functions/acts specified in the flowchart and/or block diagram block or blocks.

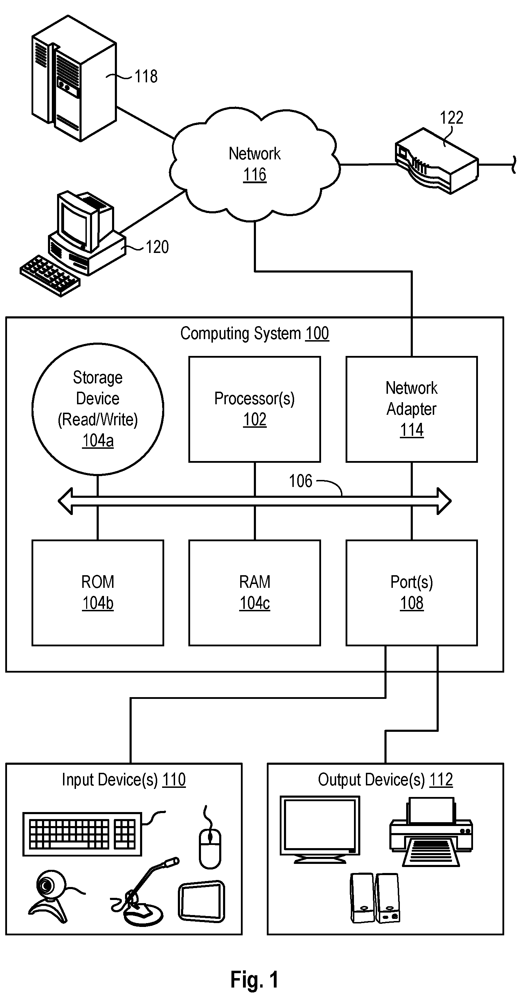

Referring to Figure 1, one example of a computing system 100 is illustrated. The computing system 100 is presented to show one example of an environment where a system 200 in accordance with the invention may be developed and/or executed. The computing system 100 may be embodied as a desktop computer, a workstation, a laptop computer, a server, a storage controller, a mobile device such as a smart phone or tablet, or the like. The computing system 100 is presented by way of example and is not intended to be limiting. Indeed, the system 200 disclosed herein may be implemented on a wide variety of different computing systems in addition to the computing system 100 shown. The system 200 may also potentially be distributed across multiple computing systems 100.

As shown, the computing system 100 includes at least one processor 102 and may include more than one processor 102. The processor 102 may be operably connected to a memory 104. The memory 104 may include one or more non-volatile storage devices such as hard drives 104a, solid state drives 104a, CD-ROM drives 104a, DVD-ROM drives 104a, tape drives 104a, or the like. The memory 104 may also include non-volatile memory such as a read-only memory 104b (e.g., ROM, EPROM, EEPROM, and/or Flash ROM) or volatile memory such as a random access memory 104c (RAM or operational memory). A bus 106, or plurality of buses 106, may interconnect the processor 102, memory devices 104, and other devices to enable data and/or instructions to pass therebetween.

To enable communication with external systems or devices, the computing system 100 may include one or more ports 108. Such ports 108 may be embodied as wired ports 108 (e.g., USB ports, serial ports, Firewire ports, SCSI ports, parallel ports, etc.) or wireless ports 108 (e.g., Bluetooth, IrDA, etc.). The ports 108 may enable communication with one or more input devices 110 (e.g., keyboards, mice, touchscreens, cameras, microphones, scanners, storage devices, etc.) and output devices 112 (e.g., displays, monitors, speakers, printers, storage devices, etc.). The ports 108 may also enable communication with other computing systems 100.

In certain embodiments, the computing system 100 includes a wired or wireless network adapter 114 to connect the computing system 100 to a network 116, such as a local area network (LAN), wide area network (WAN), storage area network (SAN), or the Internet. Such a network 116 may enable the computing system 100 to connect to or communicate with one or more servers 118, workstations 120, personal computers 120, mobile computing devices, or other devices. The network 116 may also enable the computing system 100 to connect to or communicate with another network by way of a router 122 or other device 122. Such a router 122 may allow the computing system 100 to communicate with servers, workstations, personal computers, or other devices located on different networks.

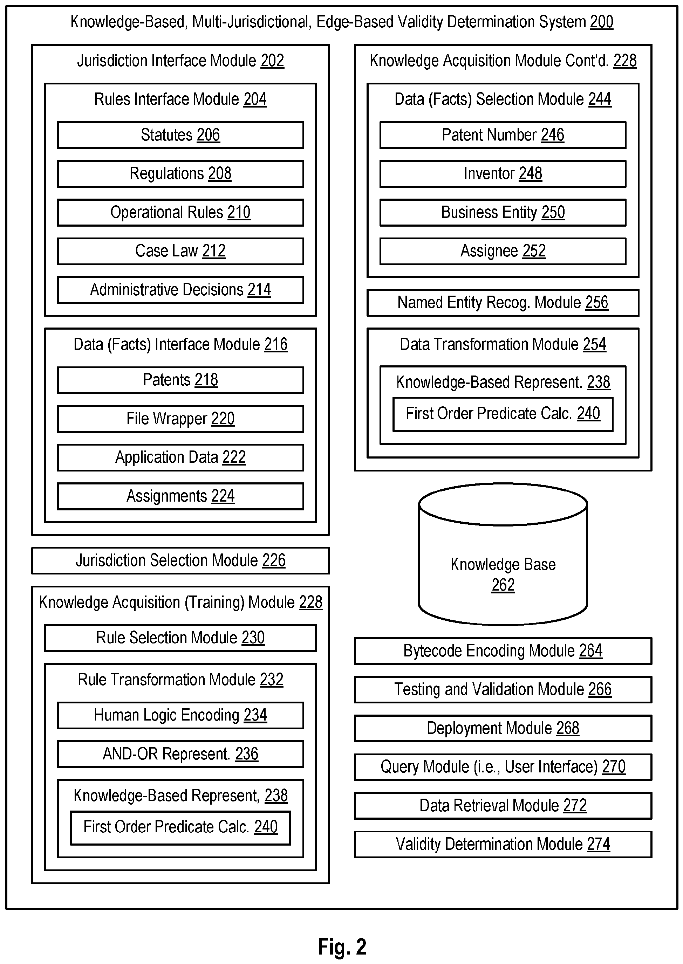

Referring to Figure 2, as previously mentioned, with any intellectual property right such as a patent, trademark, copyright, or the like, the jurisdiction having the authority to grant and enforce the intellectual property right may set forth requirements for granting or maintaining the intellectual property right. These requirements may be set forth in statutes, regulations, operating rules, case law, administrative decisions, and/or the like, of the particular jurisdiction that is authorized to grant, enforce, and maintain the intellectual property right. In certain cases, statutes, regulations, and operating rules may be established in accordance with treaties or agreements between multiple jurisdictions to provide consistency and enforceability across the jurisdictions. In some cases, invalidity or unenforceability of an intellectual property right in a first jurisdiction may lead to invalidity or unenforceability of a corresponding intellectual property right in another jurisdiction, such as where an intellectual property right in one jurisdiction claims priority to an intellectual property right in another jurisdiction.

In some cases, violation or non-compliance with the above-described requirements may be grounds for the jurisdiction to deny the grant of the intellectual property right. In other cases, later discovery of a violation or non-compliance with the requirement may be grounds for the jurisdiction to invalidate or deem unenforceable an intellectual property right that has already been granted.

In litigation, disputes, or when doing due diligence involving intellectual property, many intellectual property rights (e.g., patent, trademarks, etc.) are frequently involved. Determining liability between parties in litigation or disputes may ultimately depend on the validity or enforceability of the underlying intellectual property rights. Thus, challenging the validity or enforceability of an intellectual property right may be one way to avoid liability, or provide a party freedom to operate in a space previously clouded or protected by the intellectual property right. Nevertheless, performing due diligence necessary to determine the validity or enforceability of intellectual property rights can be a time-consuming and laborious process, not only because many facts may be associated with each intellectual property right and many intellectual property rights may be involved, but also because many statutes, regulations, and/or operating rules may govern the validity or enforceability of the intellectual property rights.

As shown in Figure 2, in certain embodiments, a knowledge-based, AI-driven, multi-jurisdictional, edge-based validity determination system 200 may be provided to determine or assist with determining the validity or enforceability of intellectual property rights such as patents, trademarks, or copyrights. Such a system 200 may be embodied as hardware, software, firmware, or a combination thereof.

In one embodiment, the system 200 is configured to interface with databases storing rules and facts from different jurisdictions. In certain embodiments, a rules interface module 204 may be configured to interface with legal rules from various jurisdictions. As previously mentioned, the rules may include one or more of statues 206, regulations 208, operational rules 210, case law 212, administrative decisions 214, or the like, of the various jurisdictions. As an example, in the United States, patent statutes 206 may include the patent laws in Title 35 of the United States Code, patent regulations 208 may include Title 37 of the Code of Federal Regulations, and operational rules 210 may include the Manual of Patent Examining Procedure (MPEP) which assists examiners, attorneys, and the public with applying the United States patent statutes 206 and regulations 208. In some cases, different jurisdictions (e.g., countries, states, economic alliance, etc.) may utilize different databases to store their intellectual property rules and the rules interface module 204 is configured to interface with the databases of these different jurisdictions.

Similarly, the system 200 may include a data interface module 216 to interface with intellectual property data (i.e., facts) of the various jurisdictions. This intellectual property data may include, for example, patents 218 granted by the jurisdictions, file wrappers 220 of patents 218 granted by the jurisdictions which show the prosecution history of patents 218 and contain documents associated with the prosecution of the patents 218, application data 222 of patents 218 which may include information such as application number, patent number, priority information, and the like associated with patents 218, assignments 224 of patents 218 which show the ownership of the patents 218, and the like. These represent just some examples of intellectual property data that may be accessed by the data interface module 216 and are not intended to be limiting.

In certain embodiments, the rules interface module 204 and data interface module 216 may use the World Intellectual Property Organization (WIPO) as a starting point for accessing rules and data of different jurisdictions. WIPO maintains databases storing rules and granted intellectual property rights (e.g., patent, trademarks, etc.) for its member states. Furthermore, WIPO is a repository for the Trade-Related Aspects of Intellectual Property Rights (TRIPS) agreement. TRIPS provides overarching requirements of intellectual property law for various member nations and provides an ontology that can be utilized within the knowledge-based, AI-driven system 200. Specifically, TRIPS defines various intellectual-property-related words and phrases that are implemented in the domestic laws of different member jurisdictions.

As further shown in Figure 2, the system 200 may include a jurisdiction selection module 226 to select a jurisdiction from the multiple jurisdictions accessible by the system 200. For example, a user may wish to develop a knowledge base 262 of various intellectual property rules in the United States so that the validity of one or more U.S. patents 218 may be determined. In such a case, the jurisdiction selection module 226 may select the United States as the jurisdiction of interest.

Once the jurisdiction is selected, a knowledge acquisition module 228 may be used to acquire knowledge about the jurisdiction for accumulation in the knowledge base 262. This knowledge may come in the form of rules and data (also referred to herein as "facts"). In certain embodiments, a rule selection module 230 may be used to select a rule for a jurisdiction to be added to the knowledge base 262. For example, where United States patents are involved, the rule may involve the "entity status" of an inventor on a U.S. patent 218, or an oath or declaration of an inventor on a U.S. patent 218. Non-compliance of an inventor with either an "entity status" rule or oath or declaration rule could potentially lead to a patent 218 being invalidated.

Once a rule is selected, a rule transformation module 232 may transform the rule into a form or format that is suitable for storing and accessing in the knowledge base 262. In certain embodiments, this may include transforming the rule from human-logic encoding 234 (e.g., a spoken or natural language in which a rule is expressed in a statute 206, regulation 208, or operational rule 210) to a more suitable knowledge-based representation 238 for storage and access in the knowledge base 262. In certain embodiments, various intermediate forms may be used in the transformation. For example, a human-logic-encoded rule may be converted to an AND-OR representation 236 (e.g., an AND-OR graph 236), after which it may be transformed to the knowledge-based representation 238.

In certain embodiments, transforming the rules to a knowledge-based representation 238 includes representing the rules as ("IF-THEN" rules) predicates of first order predicate calculus 240. Predicate calculus is a formal mathematical basis that allows problems to be stated and mathematically solved or proved. Predicate calculus has proven successful in theorem provers and the like. Predicate calculus may be used to avoid ad hoc attempts to solve problems-once proven each step in the proof may be used to explain the solution/proof. Predicate calculus may also be used to represent rules since predicates may be readily transformed into bytecodes or other code for execution on a logical inference processor, as will be discussed in more detail hereafter.

In addition to rules, various data or facts may also be stored in the knowledge base 262. For example, in certain embodiments, a selected group of patents 218 and associated data may be stored in the knowledge base 262 along with the selected rules. These facts may be specifically selected as those to be evaluated by the rules in the knowledge base 262. For example, if a user would like to evaluate a selected group of patents 218 with the rules in the knowledge base 262, these patents 218 may be added to the knowledge base 262 as facts in a suitable representation.

To provide this functionality, the knowledge acquisition module 228 may include a data selection module 244 to select data for inclusion in the knowledge base 262. For example, where patents 218 are the data to be included the knowledge base 262, the data selection module 244 may enable patents 218 to be selected by patent number 246, inventor 248, business entity 250 (e.g., where the applicant is a business entity), or by assignee 252. In other or the same embodiments, selecting a patent 218 may cause all patents 218 in the same patent family that are either upstream or downstream from the selected patent 218 from a priority perspective (i.e., patents 218 from which the selected patent 218 claims priority or patents 218 that claim priority from the selected patent 218) to be included in the knowledge base 262. Other techniques or criteria may be used to select patents 218 or other data to be retrieved from a jurisdiction's database and stored in the knowledge base 262 in a suitable form and format.

In certain embodiments, when selecting certain data or facts for inclusion in the knowledge base 262, a named entity recognition module 256 may be used to parse and look for data to be included in the knowledge base 262. For example, if a group of patents 218 and associated oaths or declarations are to be included in the knowledge base 262, the named entity recognition module 256 may comb through a database (such as the USPTO's PAIR database) to look for items labelled as "oaths" or "declarations" in a patent's file wrapper or other sources. The named entity recognition module 256 may recognize the names of these documents and retrieve them from any available source at any time for inclusion in the knowledge base 262. This is significantly different from a relational database in that a relational database can only access information that is encoded into the database.

In certain embodiments, a data transformation module 254 may be provided to transform data (e.g., patents or associated data) into a form or format (i.e., a knowledge-based representation 238) that is suitable for representation in the knowledge base 262. In certain embodiments, the data or facts are represented as predicates of first order predicate calculus 240. One notable attribute of first order predicate calculus 240 is that, like the rules included in the knowledge base 262, data or facts may also be expressed as predicates in accordance with first order predicate calculus 240. Thus, in certain embodiments, like the rules, data or facts may be stored in the knowledge base 262 as predicates in accordance with first order predicate calculus 240. For the purposes of this disclosure, the process of transforming rules and data into a knowledge-based representation 238 for storage and access in the knowledge base 262 is also referred to as "training" or knowledge acquisition.

Once selected rules and facts are stored in the knowledge base 262 in a suitable knowledge-based representation 238, a bytecode encoding module 264 may convert the knowledge-based representation 238 into bytecodes or other suitable codes for execution on a logical inference processor. As previously mentioned, where the rules and facts are stored in the knowledge base 262 as predicates of first order predicate calculus 240, the predicates may be readily transformed into bytecodes. In certain embodiments, a testing and validation module 266 may be used test the predicates or bytecodes with a particular set of facts to validate and verify a proper logical outcome.

Once the knowledge base 262 is trained and validated and the knowledge-based representation 238 is converted into bytecodes for execution on a logical inference processor, a deployment module 268 may deploy the bytecodes to an edge device, which may include, for example, a personal computer, smart phone, tablet, notebook computer, IoT device, or the like. The bytecodes may then be executed on a logical inference processor implemented on the edge device. In certain embodiments, a query module 270 may enable a user to submit queries to the knowledge base 262 on the edge device. For example, using the examples provided above regarding an "entity status" rule or an oath or declaration rule, the query module 270 may enable a user to query the knowledge base 262 for patents 218 in the knowledge base 262 that have not fully complied with the "entity status" rule or an oath or declaration rule.

In the event additional data is needed to determine whether a patent 218 has complied with a rule (i.e., data that is not in the knowledge base 262), a data retrieval module 272 may be configured to retrieve the additional data. For example, when determining whether a patent has complied with the "entity status" rule discussed above, financial information may be needed for the inventors, applicant, or assignee of the patent 218. In certain embodiments, the data retrieval module 272 may ask the user for this information or the data retrieval module 272 may be configured to retrieve the information from an online source, such as a public database on the Internet. Thus, the data retrieval module 272 may enable a user to fill in missing information or retrieve information that is not in the knowledge base 262 in order to determine whether a particular patent 218 or intellectual property right has complied with a particular rule.

In certain embodiments, a validity determination module 274 may generate an opinion or finding as to the validity or invalidity of a patent 218 or intellectual property right in response to queries of the knowledge base 262. In yet other or the same embodiments, the validity determination module 274 may also trace a priority chain of a patent 218 or other intellectual property right determined to be valid/invalid to determine potential validity/invalidity of other patents 218 or intellectual property rights in the priority chain. This can potentially occur across jurisdictions since a patent 218 or intellectual property right in one jurisdiction may claim priority to a patent 218 or intellectual property right in another jurisdiction and therefore the validity of the intellectual property in one jurisdiction may affect the validity of the intellectual property right in the other jurisdiction.

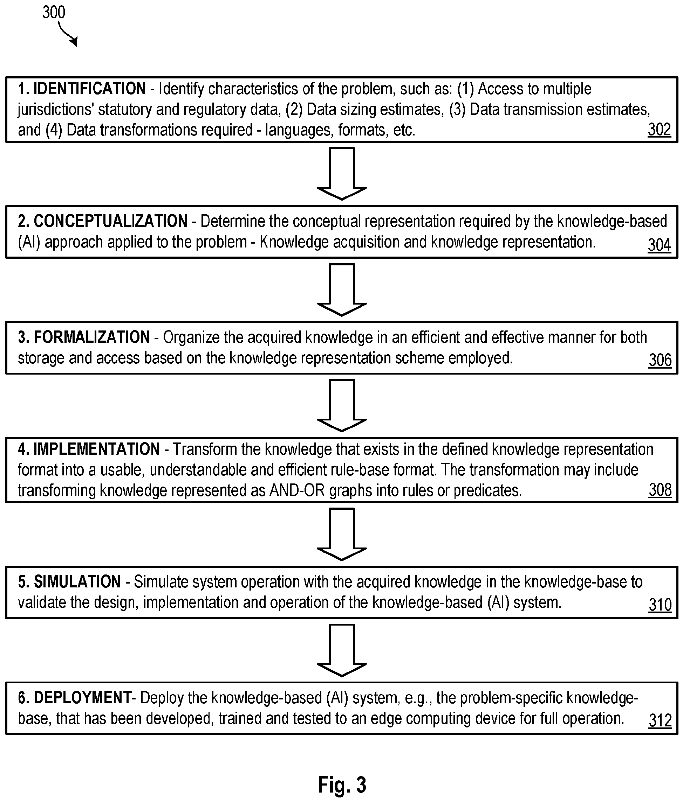

Referring to Figure 3, a process flow diagram showing one embodiment of a method 300 for training a knowledge-based, AI-driven system 200 in accordance with the invention is disclosed. In one embodiment, the method 300 initially identifies characteristics of a problem scenario of interest, such as inventor oaths, inventorship, "entity status," or the like. The method 300 then identifies 302 the legal rules (e.g., statues 206, regulations 208, operational rules 210, etc.) that address these topics in the various jurisdictions of interest, and which data stores contain the rules. This step 302 may also include estimating an amount of data that needs to be stored, data transmission estimates for retrieving the data, and which data transformations may be required (e.g., natural language to AND-OR graph 236 to first order predicate calculus 240, etc.).

The method 300 may then conceptualize 304 what the knowledge base 262 would look like to address the problem scenario, such as how rules and data may be represented within the knowledge base 262 (using predicate calculus 240 to represent rules and data for example). The method 300 then formalizes 306 the approach by organizing any knowledge that is acquired in an efficient and effective manner for both storage and access based on the knowledge representation scheme that is employed. The method 300 then transforms 308 any knowledge that is acquired in the defined knowledge representation format into a usable, understandable, and efficient rule-base format. For example, the transformation may include transforming knowledge that is represented in the form of AND-OR graphs into rules or predicates conforming to first order predicate calculus 240.

The method 300 then simulates 310 operation of the system 200 with the acquired knowledge in the knowledge base 262 to validate the design, implementation, and operation of the knowledge-based, AI-driven system 200. For example, the method 300 may test and validate predicates or resulting bytecodes with a particular set of facts to validate and verify a proper logical outcome. Once the system 200 is simulated and validated, the method 300 may deploy 312 the knowledge-based, AI-driven system 200 to an edge device for full operation.

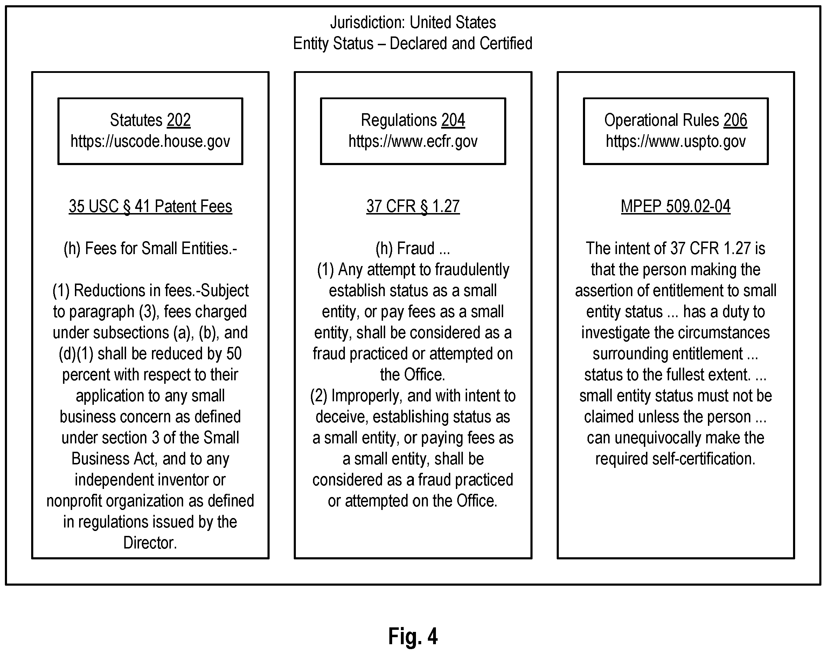

Referring to Figures 4-6, a first example is provided to show United States "entity status" rules in a natural language transformed into an intermediate representation (i.e., an AND-OR graph 236) and then into ("IF-THEN" rules) predicates using first order predicate calculus 240. As shown in Figure 4, in the United States, "entity status" legal rules may be set forth in various sources, including federal statues 206, federal regulations 208, and operational rules 210 or procedures such as the Manual of Patent Examining Procedure (MPEP), among other places. As shown, the "entity status" legal rules are set forth in a natural language (i.e., English). As known to those of skill in the art of U.S. patent law, the "entity status" legal rules set forth requirements for claiming a "micro entity" or "small entity" status, which may entitle an inventor or applicant to a reduced fee schedule at the U.S. Patent and Trademark Office for various patent-related fees. Not complying with these rules or falsifying information may be grounds to invalidate a patent 218 that was obtained under either of these "entity status" designations.

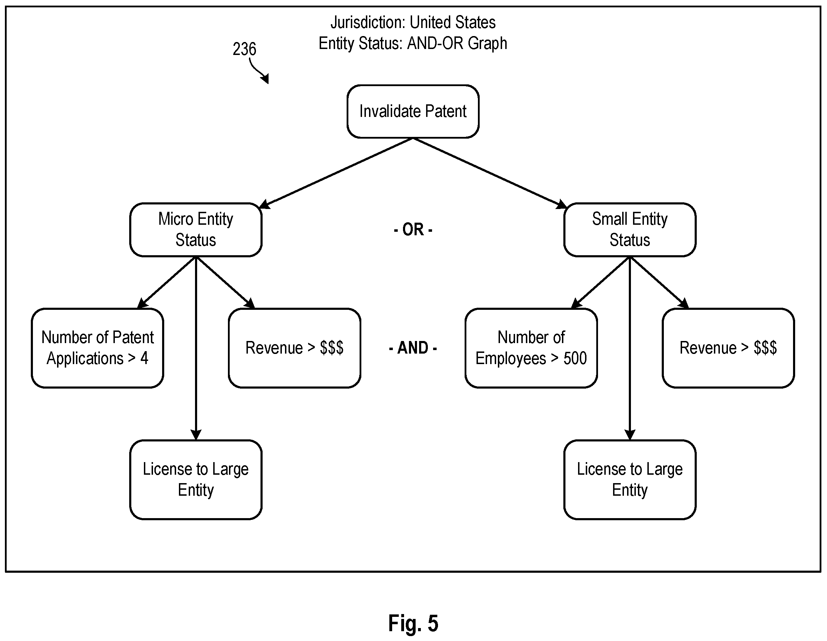

As shown in Figure 5, the legal rules of Figure 4 may, in certain embodiments, be transformed or distilled into an AND-OR graph 236 that sets forth various logic conditions that, if true or false, may indicate that a patent 218 is invalid or could potentially be invalid. The AND-OR graph 236 is readily converted to ("IF-THEN" rules) predicates of first order predicate calculus 240 to reduce a natural language rule into a mathematical formula that can be proved or disproved. As shown in Figure 5, the logic conditions in the AND-OR graph 236 involve a number of previously filed patent applications an inventor or applicant is named on, a gross income of an inventor or applicant, whether an inventor or applicant has assigned or is under an obligation to assign a patent to an entity that does not meet the same "entity status" requirements, and whether the patent involves a small business concern. A patent may be invalid or potentially be invalidated if the logic conditions set forth in the AND-OR graph 236 evaluate as true or false, depending on the condition. For example, a patent 218 that was obtained under the "micro entity" status designation may be invalid if an applicant or inventor associated with the patent 218 is named on more than four previously filed patent applications, an applicant or inventor has revenue that exceeds a designated threshold, or the patent 218 was assigned to an entity that did not qualify as a "micro entity."

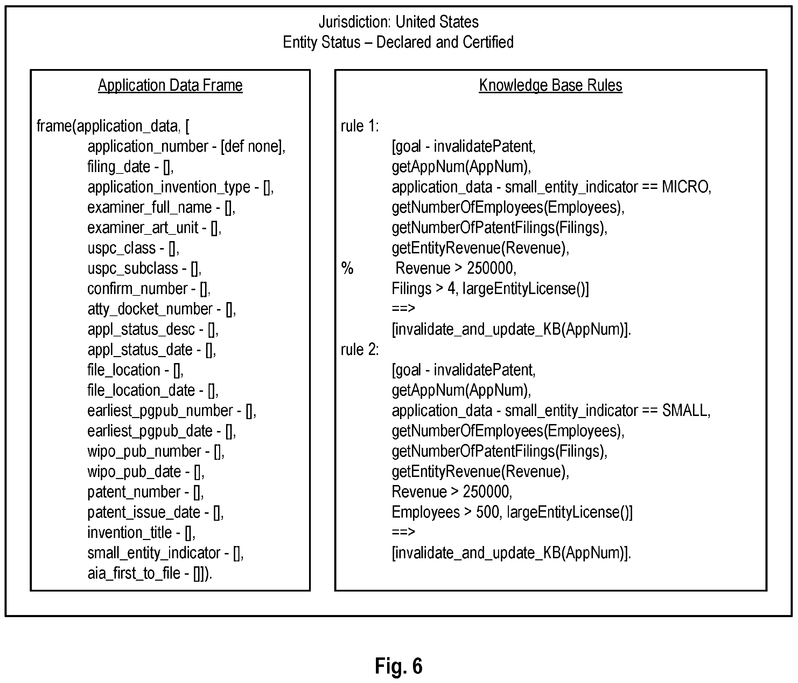

The right-hand side of Figure 6 shows the "entity status" rules expressed in ("IF-THEN" rules) predicates of first order predicate calculus 240. These predicates may, in certain embodiments, be derived from the AND-OR graph 236 of Figure 5. The left-hand side of Figure 6 shows the data or facts that are operated on or input into the rules on the right-hand side. Any data that is not listed on the left-hand side but that is needed on the right-hand side (e.g., number of employees, number of patent filings, revenue, etc.) may be supplied by a user or could be automatically retrieved, such as from a publicly available data store. The rules and data shown in Figure 6 may be executed by a logical inference processor on an edge device to determine the validity or invalidity of a patent 218 that is listed on the left-hand side of Figure 6.

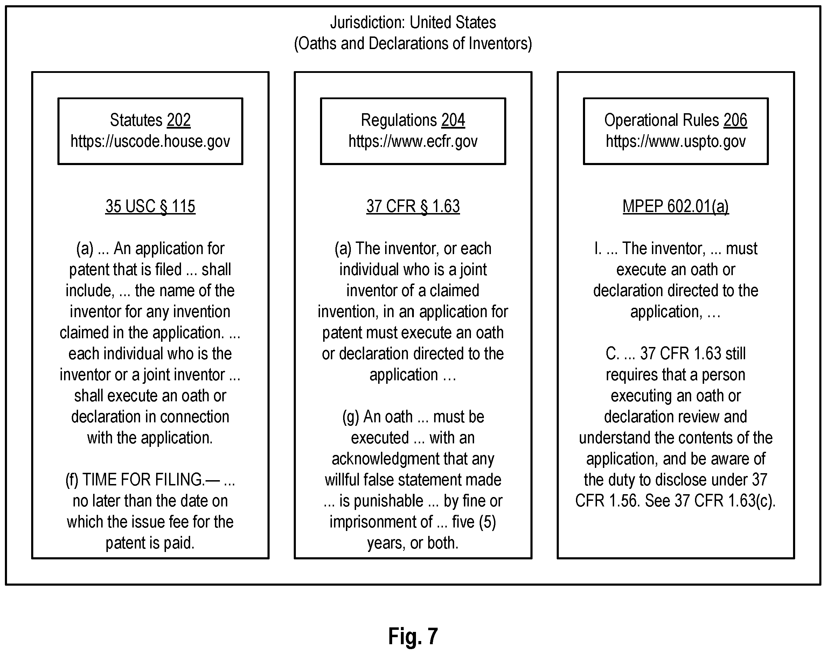

Referring to Figures 7-9, a second example is provided to show United States oath or declaration rules in a natural language transformed into an intermediate representation (i.e., an AND-OR graph 236) and then into ("IF-THEN" rules) predicates using first order predicate calculus 240. As shown in Figure 7, in the United States, oath or declaration legal rules may also be set forth in federal statues 206, regulations 208, and operational rules 210 in a natural language. As appreciated by those skilled in U.S. patent law, an oath or declaration must be executed by each inventor in order to obtain a patent 218. This oath or declaration must include various types of information to be valid and be filed within a certain time period. Failure to file a satisfactory oath or declaration by each inventor in the patent 218 may be grounds to invalidate a patent 218.

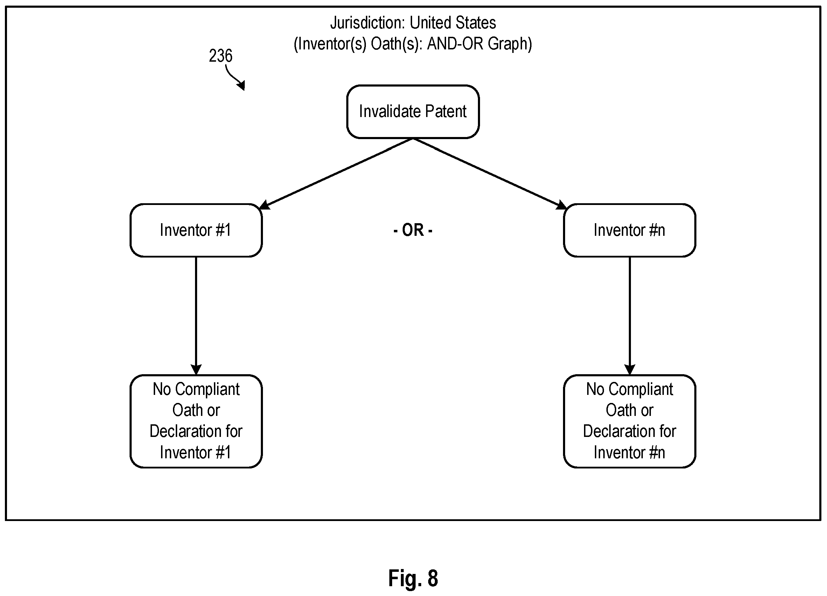

As shown in Figure 8, the legal rules of Figure 7 may be transformed or distilled into an AND-OR graph 236 that sets forth logic conditions that, if any are true, indicate that a patent 218 may be invalid or potentially invalid for failing to comply with United States oath or declaration legal rules. This AND-OR graph 236 may be converted to ("IF-THEN" rules) predicates in accordance with first order predicate calculus 240.

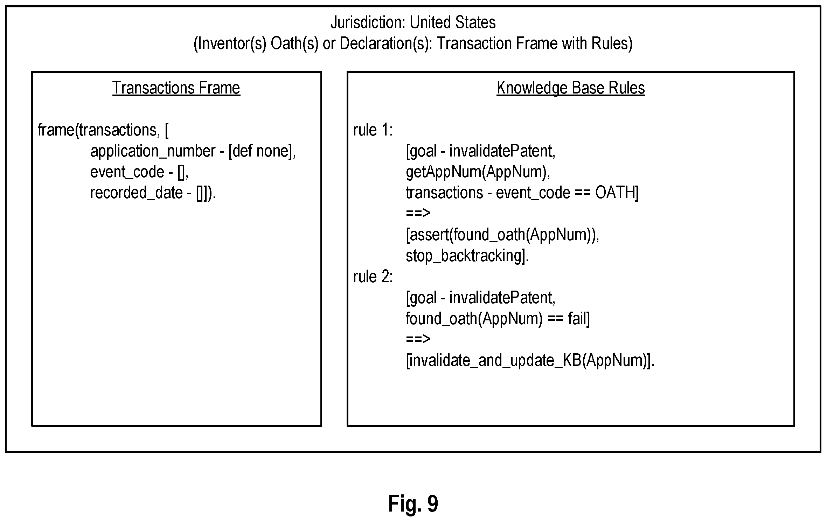

The right-hand side of Figure 9 shows the oath or declaration legal rules expressed in ("IF-THEN" rules) predicates in accordance with first order predicate calculus 240. These predicates may be derived from the AND-OR graph 236 of Figure 8. The left-hand side of Figure 9 shows the data or facts that are operated on or input into the rules on the right-hand side. The rules and data shown in Figure 9 may be executed by a logical inference processor on an edge device to determine the potential invalidity of a patent 218 that is input from the left-hand side of Figure 9.

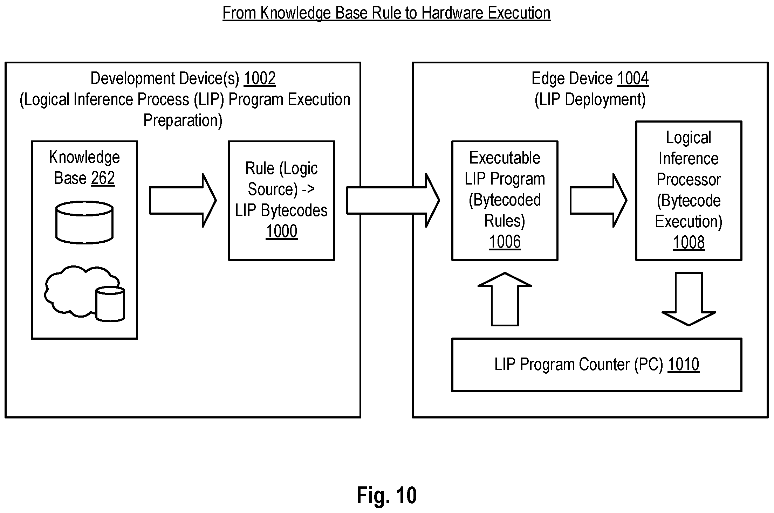

Referring to Figure 10, a high-level block diagram showing transformation of rules into bytecodes and their eventual deployment on an edge device 1004 is illustrated. As shown in Figure 10, one or more development devices 1002 may be used to develop and train the knowledge base 262. The one or more development devices 1002 may then transform the rules and facts in the knowledge base 262 into bytecodes 1000 that are executable on a logical inference processor. These bytecodes may then be deployed to an edge device 1004 for execution on a logical inference processor 1008 (LIP) implemented thereon.

At the edge device 1004, the bytecodes 1000 may be provided as an executable LIP program 1006 that is executed on the logical inference processor 1008. In general, the logical inference processor 1008 may cycle through each bytecode in the executable LIP program 1006. An LIP program counter 1010 may keep track of a next bytecode to be executed by the logical inference processor 1008.

In certain embodiments, the development device 1002 may require significantly more processing power than the edge device 1004 in order to train the knowledge base 262. Training the knowledge base 262 may, in many cases, require processing large amounts of rules and data (e.g., rules and data from the USPTO PAIR and patent databases, for example). Once the knowledge base 262 is trained, the knowledge base 262 may be converted to executable bytecodes 1000 for execution on the edge device 1004. The edge device 1004 may require significantly less processing power to execute the bytecodes 1000. Because of the significant difference in required processing power between the development device 1002 and the edge device 1004, the knowledge base 262 may be said to be "trained in the large, deployed in the small."

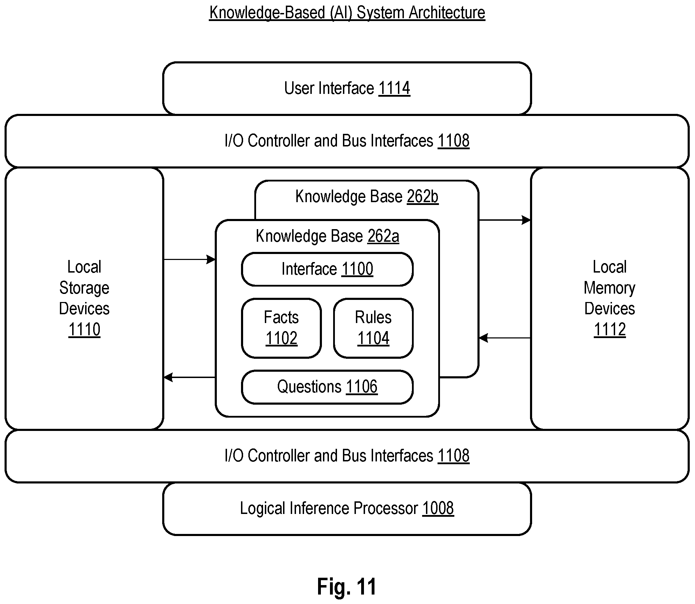

Referring to Figure 11, as alluded to above, bifurcating training of the knowledge base 262 on a development device 1002 from execution of the knowledge base 262 on an edge device 1004 allows the processing power and resources of the edge device 1004 to be much smaller than those of the development device 1002. The rules and facts that are included in the knowledge base 262 may be reduced to a minimal amount in order to perform a desired analysis on the edge device 1004. In this way, the computing requirements of the edge device 1004 required to utilize the knowledge base 262 may be small. At the same time, the edge device 1004 with the installed knowledge base 262 may enable a user to go through and analyze/validate a vast amount of information compared to what would otherwise be possible or feasible by a human alone.

The edge device 1004 may include one or more of the following to perform its various tasks: at least one logical inference processor 1008, a knowledge base 262 which contains an interface 1100, facts 1102, and rules 1104. The knowledge base 262 may also contain questions 1106, which are used to elicit additional information for the knowledge base to complete processing. All of these 1100, 1102, 1104, 1106 are executed on the logical inference processor 1008. The illustrated architecture further includes I/O controllers and bus interfaces 1108 that provide interfaces between local storage devices 1110, local memory devices 1112, a user interface 1114, and the logical inference processor 1008. The knowledge base 262, which may include a knowledge base component 262a with domain-specific facts 1102 and rules 1104 such as jurisdictional information, and a knowledge base component 262b with problem-specific facts 1102 and rules 1104 such as information required to complete the logic processing, is attached within the architecture.

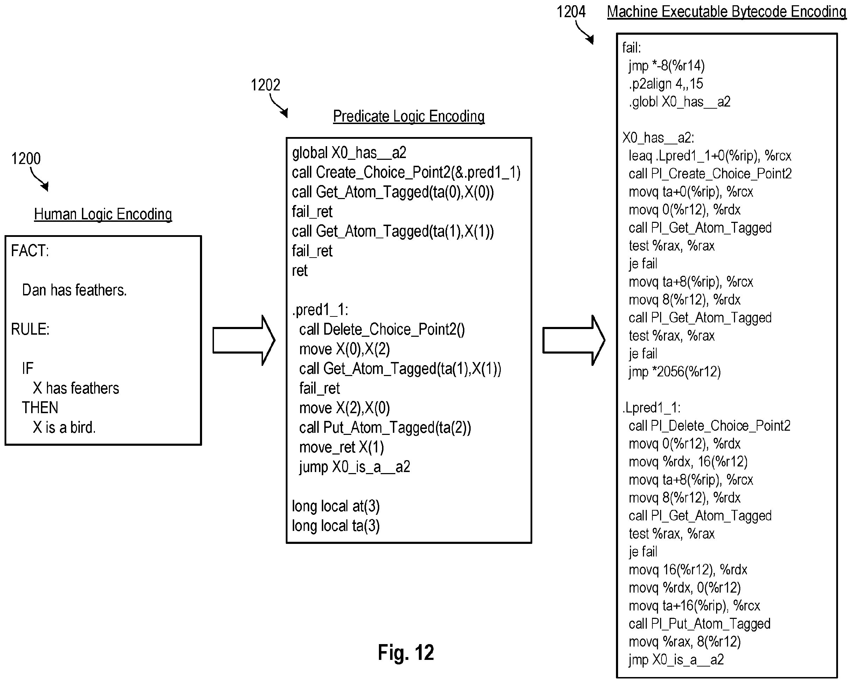

Referring to Figure 12, a high-level block diagram showing transformation of rules in a natural (spoken) language to predicate logic and then to actual bytecodes 1000 for execution on a logical inference processor 1008 is illustrated. The left-hand panel shows an example of human logic encoding 1200, the center panel shows predicate logic encoding 1202 that may be derived from the human logic encoding, and the right-hand panel shows machine-executable bytecode encoding 1204 that may be generated from the predicate logic encoding.

As shown in the center panel and right-hand panel, the predicate logic encoding and machine-executable bytecode encoding include various "choice points." These "choice points" may be evaluated as either true or false. When a "choice point" fails, the machine-executable bytecode encoding 1204 may proceed to the next "choice point" to determine whether it also fails. This may continue until all of the machine-executable bytecode encoding 1204 has been traversed.

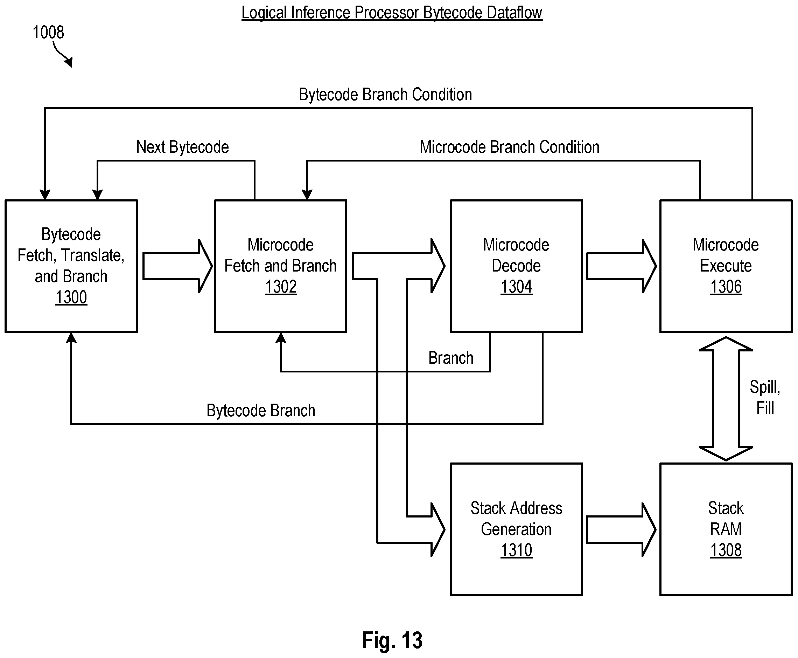

Referring to Figure 13, a high-level block diagram showing bytecode dataflow within a logical inference processor 1008 is illustrated. In certain embodiments, the logical inference processor 1008 comprises hardware that has been programmed with microcode to give it the personality and characteristics of a logical inference processor 1008. In the illustrated embodiment, the logical inference processor 1008 is shown with a serial bytecode architecture although an actual implementation of the logical inference processor 1008 would likely be built with a pipeline architecture. Assuming the logical inference processor 1008 has a serial bytecode architecture, the microcode of the logical inference processor 1008 may be configured to fetch 1302 a bytecode and decode 1304 it to a branch network.

Assuming 256 entry vectors, the microcode may then jump to an appropriate microcode routine to decode and execute a particular bytecode. The microcode may then return from the execution. This may require access to stack RAM 1308 and eventually complete and provide a return code back to the bytecode. The bytecode completes and the cycle continues. In some cases, multiple bytecode entries may be needed to perform a logical inference processing operation. In such cases multiple bytecodes may go from the microcode fetching stage to bytecode memory and obtain any additional bytecodes, and then proceed to the decoding and executing stages. Other times, the execution may have different state changes which may cause different flushes in registers and may go back to preempt the fetch and cause a branch to another location, as illustrated with the back arrows of Figure 13.

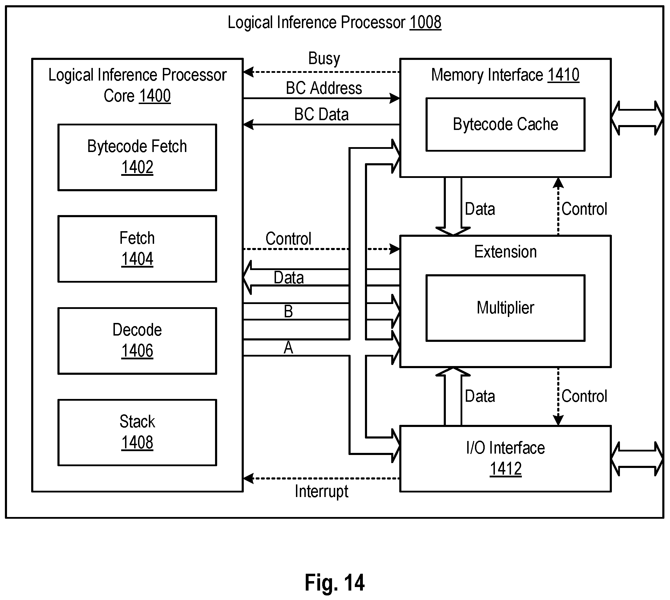

Referring to Figure 14, a high-level block diagram showing one example of the internal architecture of a logical inference processor 1008 is illustrated. As shown, the logical inference processor 1008 includes a core 1400 that consists of bytecode fetching 1402, additional bytecode fetching 1404, decoding 1406, a stack 1408, and execution of the bytecodes 1000. There will also typically be a memory interface 1410 and an I/O interface 1412 that enables the logical inference processor 1008 to communicate with external components and enable access to local memory, local storage, remote memory, and remote storage.

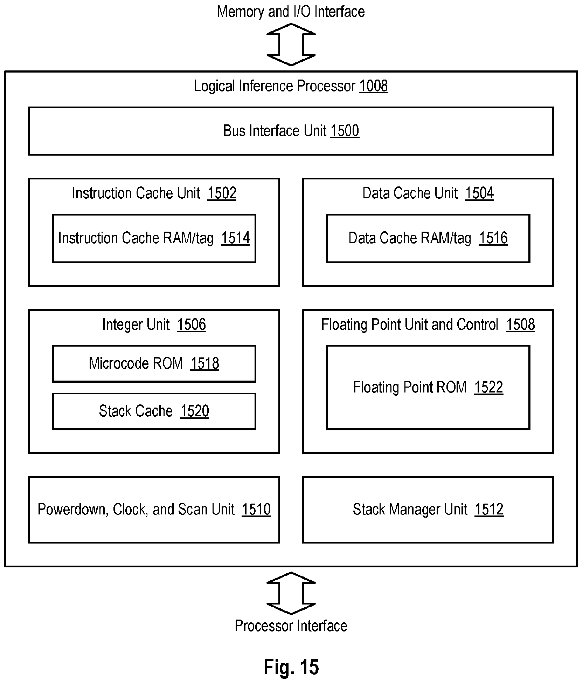

Referring to Figure 15, a high-level block diagram showing one example of a logical inference processor 1008 implemented with an application-specific integrated chip (ASIC) or a field-programmable gate array (FPGA) is illustrated. If the logical inference processor 1008 is laid out on an ASIC or FPGA, the logical inference processor 1008 may in certain embodiments include a bus interface unit 1500, an instruction cache unit 1502, a data cache unit 1504, an integer unit 1506, a floating point and control unit 1508, a power-down, clock, and scan unit 1510, and a stack manager unit 1512. The instruction cache unit 1502 may include an instruction cache RAM/tag 1514 and the data cache unit 1504 may include a data cache RAM/tag 1516. The integer unit 1506 may include a microcode ROM 1518 and a stack cache 1520. The floating point unit 1508 may include a floating point ROM 1522. Each of these features or blocks may, in certain embodiments, be a soft core that is obtained from a library such as a VHDL or VERILOG library and assembled into the functionality of a logical inference processor 1008. In other cases, the logical inference processor 1008 may be microprogrammed into an existing processor. This may be the simplest way to implement a logical inference processor 1008 in accordance with the invention. The logical inference processor 1008 may also be emulated and/or interpreted in certain embodiments.

With regard to the performance of the logical inference processor 1008, logical inferences per second (LIPS) are typically far more resource bound than processor instructions per second (IPS). For example, one study documented that a special-purpose machine that could achieve 570 million instructions per second (MIPS) could only achieve 50-100 LIPS, a differential of between 10,000 to 20,000 times. Interpretation typically incurs a 100-1000 times reduction in performance compared to hardware execution. Thus, a logical inference processor 1008 that is implemented in hardware is much faster and preferred in most embodiments.

The flowcharts and block diagrams in the Figures illustrate the architecture, functionality, and operation of possible implementations of systems, methods, and computer program products according to various embodiments of the present invention. In this regard, each block in the flowcharts or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other implementations may not require all of the disclosed steps to achieve the desired functionality. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

## Claims

1. A method for ascertaining validity or enforceability of an intellectual property right, the method comprising:
identifying a jurisdiction associated with an acquired intellectual property right;
identifying at least one logic condition of the jurisdiction deemed to affect validity or enforceability of the acquired intellectual property right, wherein the at least one logic condition is encoded in a spoken language associated with the jurisdiction;
converting the at least one logic condition from the spoken language into at least one predicate conforming to first order predicate calculus;
training, on a computing device, the at least one predicate with a particular set of facts to validate and verify a proper logic result;
deploying the at least one predicate to an edge device to execute on a logical inference processor implemented on the edge device; and
providing by the edge device evidence to challenge at least one of invalidity and unenforceability of the acquired intellectual property right.

2. The method of claim 1, wherein the at least one logic condition comprises at least one of a statute of the jurisdiction, a regulation of the jurisdiction, and an operational rule of the jurisdiction used to implement a statute or regulation of the jurisdiction.

3. The method of claim 1, wherein the at least one logic condition further affects validity or enforceability of the acquired intellectual property right in a jurisdiction other than the identified jurisdiction.

4. The method of claim 1, wherein training the at least one predicate with a particular set of facts comprises extracting certain facts from a non-relational database.

5. The method of claim 4, wherein training the at least one predicate with a particular set of facts further comprises querying a user for certain facts.

6. The method of claim 1, wherein the intellectual property right is selected from the group consisting of a patent, a trademark, and a copyright.

7. The method of claim 1, wherein the at least one logic condition is selected from the group consisting of: an inventorship logic condition, an entity status logic condition, a logic condition pertaining to an oath or declaration, a logic condition pertaining to a payment of fees, a logic condition pertaining to a duty to disclose prior art, a logic condition relating to a priority chain, a logic condition pertaining to a bar date or public disclosure, a logic condition pertaining to a novelty requirement, a logic condition pertaining to a non-obviousness requirement, and a logic condition pertaining to an enablement requirement.

8. A computer program product for ascertaining the validity or enforceability of an intellectual property right, the computer program product comprising a computer-readable storage medium having computer-usable program code embodied therein, the computer-usable program code configured to perform the following when executed by at least one processor:
identify a jurisdiction associated with an acquired intellectual property right;
identify at least one logic condition of the jurisdiction deemed to affect validity or enforceability of the acquired intellectual property right, wherein the at least one logic condition is encoded in a spoken language associated with the jurisdiction;
convert the at least one logic condition from the spoken language into at least one predicate conforming to first order predicate calculus;
train, on a computing device, the at least one predicate with a particular set of facts to validate and verify a proper logical outcome;
deploy the at least one predicate to an edge device to execute on a logical inference processor implemented on the edge device; and
provide by the edge device evidence to challenge at least one of invalidity and unenforceability of the acquired intellectual property right.

9. The computer program product of claim 8, wherein the at least one logic condition comprises at least one of a statute of the jurisdiction, a regulation of the jurisdiction, and an operational rule of the jurisdiction used to implement a statute or regulation of the jurisdiction.

10. The computer program product of claim 8, wherein the at least one logic condition further affects validity of the acquired intellectual property right in a jurisdiction other than the identified jurisdiction.

11. The computer program product of claim 8, wherein training the at least one predicate with a particular set of facts comprises extracting certain facts from a non-relational database.

12. The computer program product of claim 11, wherein training the at least one predicate with a particular set of facts further comprises querying a user for certain facts.

13. The computer program product of claim 8, wherein the intellectual property right is selected from the group consisting of a patent, a trademark, and a copyright.

14. The computer program product of claim 8, wherein the at least one logic condition is selected from the group consisting of: an inventorship logic condition, an entity status logic condition, a logic condition pertaining to an oath or declaration, a logic condition pertaining to a payment of fees, a logic condition pertaining to a duty to disclose prior art, a logic condition relating to a priority chain, a logic condition pertaining to a bar date or public disclosure, a logic condition pertaining to a novelty requirement, a logic condition pertaining to a non-obviousness requirement, and a logic condition pertaining to an enablement requirement.

15. A system for ascertaining the validity or enforceability of an intellectual property right, the system comprising:
at least one processor;
at least one memory device operably coupled to the at least one processor and storing instructions for execution on the at least one processor, the instructions causing the at least one processor to:
identify a jurisdiction associated with an acquired intellectual property right;
identify at least one logic condition of the jurisdiction deemed to affect validity or enforceability of the acquired intellectual property right, wherein the at least one logic condition is encoded in a spoken language associated with the jurisdiction;
convert the at least one logic condition from the spoken language into at least one predicate conforming to first order predicate calculus;
train, on a computing device, the at least one predicate with a particular set of facts to validate and verify a proper logical outcome;
deploy the at least one predicate to an edge device to execute on a logical inference processor implemented on the edge device; and
provide by the edge device evidence to challenge at least one of invalidity and unenforceability of the acquired intellectual property right.

16. The system of claim 15, wherein the at least one logic condition comprises at least one of a statute of the jurisdiction, a regulation of the jurisdiction, and an operational rule of the jurisdiction used to implement a statute or regulation of the jurisdiction.

17. The system of claim 15, wherein the at least one logic condition further affects validity or enforceability of the acquired intellectual property right in a jurisdiction other than the identified jurisdiction.

18. The system of claim 15, wherein training the at least one predicate with a particular set of facts comprises extracting certain facts from a non-relational database.

19. The system of claim 18, wherein training the at least one predicate with a particular set of facts further comprises querying a user for certain facts.

20. The system of claim 15, wherein the at least one logic condition is selected from the group consisting of: an inventorship logic condition, an entity status logic condition, a logic condition pertaining to an oath or declaration, a logic condition pertaining to a payment of fees, a logic condition pertaining to a duty to disclose prior art, a logic condition relating to a priority chain, a logic condition pertaining to a bar date or public disclosure, a logic condition pertaining to a novelty requirement, a logic condition pertaining to a non-obviousness requirement, and a logic condition pertaining to an enablement requirement.
